# EUROPÄISCHE PATENTSCHRIFT

(11) **EP 0 565 109 B1**
(45) Veröffentlichungstag und Bekanntmachung des Hinweises auf die Patenterteilung: **23.07.1997**
(21) Anmeldenummer: 93105853.1
(22) Anmeldetag: 08.04.1993
(51) Int. Cl.: B27N 1/00, C12S 3/00

(54) **Verfahren zum Verkleben von Holzfragmenten**
Process for glueing wood fragments
Procédé pour coller des fragments de bois

(30) Priorität: 09.04.1992 DE 4211981; 22.02.1993 DE 4305411
(43) Veröffentlichungstag der Anmeldung: 13.10.1993
(73) Patentinhaber: G.A. Pfleiderer Unternehmensverwaltung GmbH & Co. KG, 92304 Neumarkt (DE)
(72) Erfinder: Kharazipour, Alireza, Dr., W-3400 Göttingen (DE); Hüttermann, Aloys, Prof., Dr., W-3400 Göttingen (DE); Kühne, Gerhard, Prof., Dr., O-8054 Dresden (DE); Rong, Martin, W-8430 Neumarkt/Opf. (DE)
(74) Vertreter: Harders, Gerhard, Dr.

(56) Entgegenhaltungen:
- DE-A- 3 037 992
- ABSTRACT BULLETIN OF THE INSTITUTE OF PAPER SCIENCE AND TECHNOLOGY Bd. 61, Nr. 5, November 1990, ATLANTA US Seite 515 WAGENFUHR, A. 'Enzymatic chip modification for the production of wood based materials.'
- DATABASE WPIL Section Ch, Week 9005, Derwent Publications Ltd., London, GB; Class D16, AN 90-030354

## Beschreibung

Gegenstand der vorliegenden Erfindung ist ein Verfahren nach dem Oberbegriff des Anspruchs 1, das zur Herstellung bindemittelfreier Formkörper, insbesondere plattenförmiger Werkstoffe, dienen kann.

Spanplatten und Holzfaserplatten sind wertvolle Werkstoffe, die aus einem nachwachsendem Rohstoff, nämlich lignocellulosehaltigen Stoffen wie Holz hergestellt werden können. Diese Holzwerkstoffe werden in mannigfachen Verarbeitungszweigen als Werkstoff verwendet. Überwiegend ist hierbei die Möbelindustrie, Automobilindustrie, Verpackungsindustrie, Bauindustrie und dergleichen vertreten. Im allgemeinen werden Span- und Holzfaserplatten mit Bindemitteln vermischt, geformt und dann unter Hitze und Druck verpreßt. Sogenannte Medium-Density-Fiber-Boards (MDF)-Holzfaserplatten werden üblicherweise aus Hackschnitzeln von Nadel- oder Laubgehölzen in einer Zerfasermaschine hergestellt, beispielsweise mit sogenannten Refinern, in die gewünschte Fasergröße und Faserfeinheit gebracht. Die Holzfasern werden üblicherweise mit Kunstharzen verleimt und auf eine gewünschte Holzfaserfeuchte getrocknet. Die beleimten Holzfasern werden dann maschinell in einer Formstation auf ein Transportband (MDF-Platten) gestreut bzw. auf einem Siebband abgelegt.

Je nach dem anzustrebenden Rohdichtebereich werden somit Dämmfaserplatten (230 bis 400 kg/m³ Rohdichte), mittelharte Holzfaserplatten (350 bis 800 kg/m³ Rohdichte) sowie MDF-Platten (ca. 650 bis 900 kg/m³ Rohdichte), als auch Hartfaserplatten (ca. 800 bis 1.200 kg/m³) hergestellt.

Die Verpressung zu den plattenförmigen Werkstoffen kann dabei sowohl in diskontinuierlich arbeitenden als auch in kontinuierlich arbeitenden Pressen, den sogenannten Durchlauf- oder Contianlagen erfolgen.

Neben diesen plattenförmigen Werkstoffen sind auch mittels solchermaßen vorbereiteten Fasern Verfahren bekannt, die in einem zwei- bzw. mehrstufigen Preßvorgang die Herstellung sogenannter "Faserformteile" gestatten. Die Faserformteile werden üblicherweise in einem ersten Preßvorgang zu einem Rohkörper vorverdichtet, wobei die wesentlichen Aushärtungsreaktionen noch nicht vollständig, also erst teilweise vollzogen sind.

Die so erhaltenen "Matten", welche außerdem zur Verstärkung bzw. Erweiterung Ihres Eigenschaftsprofiles noch zusätzliche Bahnen/Gewebeeinlagen etc. enthalten können, weisen nach dem ersten Preßvorgang bereits eine für die Handhabung ausreichende Festigkeit auf und werden in einem zweiten Preßvorgang in ihre endgültige Form gebracht. Dies kann mit einem geeigneten Preßwerkzeug, welches die Form des Fertigproduktes wiederspiegelt und dem Produkt aufprägt, erfolgen.

Sowohl MDF- als auch Holzfaser- und Spanplatten werden üblicherweise mit Bindemitteln, zum Beispiel Harnstoff-Formaldehydharzen, Melamin-Formaldehydharzen, Phenol-Formaldehydharzen und/ oder Diisocyanaten als Klebekomponenten verleimt. Die Menge der Bindemittel beträgt im allgemeinen etwa 3 bis 15 Gew.-% bezogen auf die Holzfaser- bzw. Holzspänemenge (atro). Die Bindemittelmenge hängt dabei unter anderem von der Art des Bindesmittels und der Holzfaser- bwz. Holzspanart sowie Erfordernissen an die mechanischen und technologischen Eigenschaften der Holzwerkstoffe ab.

Neben den Bindemitteln auf Kunststoffbasis haben sich auch solche auf biologischer Basis bewährt. Dabei wird gemäß DE 30 37 992 C2 das aus der Zellstoffherstellung gewonnene Ligninsulfonat mit biotechnologisch gewonnenen Enzymen vermischt und den Holzfasern oder Holzspänen als Bindemittel beigemischt. Die enzymatische Katalyse bewirkt dabei das "Aushärten" der Ligninphase, so daß sich die im Bindemittel eingebundenen Holzfasern oder Holzspäne verfestigen. Dieses System aus Bindemittel und Enzym kann quasi als "biologischer Zweikomponentenkleber" aufgefaßt werden, wobei zum Beispiel das Ligninsulfonat die Kleberkomponete darstellt und das Enzym den Härter repräsentiert. Dieses Verfahren erfordert die Verwendung von Ligninsulfonat als Bindemittel während des Herstellungsverfahrens der Formkörper, insbesondere plattenförmigen Werkstoffen.

Eine Verfahrensweise der Herstellung von emissionsarmen Bindemitteln für holz- und cellulosehaltige Werkstoffe wird in der DE 36 44 397 C1 beschrieben. Nachteilig an diesem Verfahren ist nach wie vor der Einsatz eines Bindemittels auf Kunstharzbasis, das gemeinsam mit ligninartigen Abfallstoffen, wie z. B. Sulfitablaugen, dem lignocellulosehaltigem Stoff vor dem Verpressen beigemischt werden muß.

In der Dissertation A. Wagenführ "Praxisrelevante Untersuchungen zur Nutzung biotechnologischer Wirkprinzipien bei der Holzwerkstoffherstellung", Technische Universität Dresden 1988 wird u. a. die Möglichkeit der enzymatischen Faserstoffaktivierung holzeigener Bindekräfte zur Einsparung synthetischer Bindemittel untersucht mit dem Fernziel einer bindemittelfreien Faser-Faser-Bindung. Dabei soll das bei der Holzzerfaserung entstehende inkrustierte Lignin möglichst weitgehend entfernt werden. Der Autor hält es nicht für möglich, das inkrustierte Mittellamellenlignin des Holzes selbst zu aktivieren und zu verkleben.

Das der Erfindung zugrundeliegende technische Problem besteht darin, ein Verfahren bereitzustellen, das ohne Zusatz eines synthetische Bindemittels lediglich durch Einwirkung eines Enzyms auf ein chemisch nicht vorbehandeltes Lignin zu Herstellung von Formkörpern, insbesondere plattenförmigen Werkstoffen aus zerkleiner en Holzfragmenten eingesetzt werden kann und mindestens teilweise in konventionellen Anlagen oder Anlagenteilen verarbeitet werden kann, wie sie im Stand der Technik weiter oben beschrieben worden sind.
Dies ermöglicht die Herstellung von Formkörpern, insbesondere plattenförmigen Werkstoffen aus lignocellulosehaltigen Stoffen, die keine zusätzlichen Bindemittel enthalten.

Das der Erfindung zugrundeliegende technische Problem wird gelöst durch ein Verfahren gemäß den Merkmalen des Anspruchs 1. Die Unteransprüche 2 bis 17 betreffen bevorzugte Ausführungsformen des erfindungsgemäßen Verfahrens.

Bei der Zerkleinerung von Holz, insbesondere bei der Zerfaserung, werden die Holzteilchen verzugsweise entlang der Mittellamellen, die den größten Teil des Lignins enthalten, aufgespalten. Da bei der Zerfaserung von Holz ein großer Energieaufwand erforderlich ist, der zu einer Erwärmung der zu zerkleinernden Teilchen führt, die oberhalb des Glasumwandlungspunkts des Lignins liegt, kann es insbesondere bei der mechanischen Zerfaserung vorkommen, daß das Lignin an seiner Oberfläche in eine glasartige Struktur übergeht. Bei der Zerfaserung durch Dampfverfahren wird diese Glasphasenbildung weniger stark beobachtet. Die reaktionsträge Glasphase ist chemischen Reaktionen gegenüber häufig recht unzugänglich, was auch für Enzymreaktionen gilt.

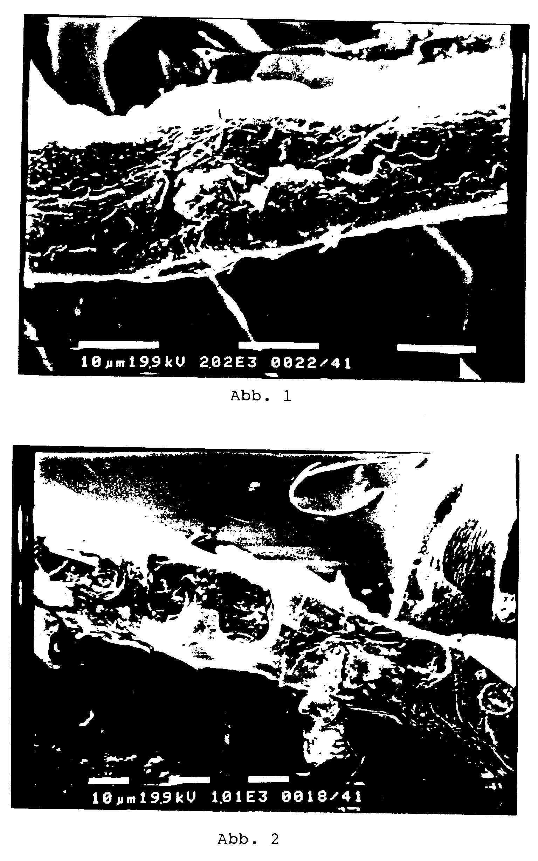

Die Abbildungen 1 und 2 zeigen Mikrofotografien von Ligninfasern, die in einem Refiner defibriert worden sind. Auf der Oberfläche der Fasern ist deutlich die Ausbildung der glasartigen Phase zu beobachten.

Überraschenderweise läßt sich das Mittellamellen-Lignin des Holzes, selbst wenn es in der glasartigen Struktur vorliegt, durch phenoloxidierende Enzyme soweit aktivieren, daß es zu einer Polymerisation und damit zu einer Verklebung der Holzteilchen führt.

Die im erfindungsgemäßen Verfahren verwendeten phenoloxidierenden Enzyme sind in der Lage, mit dem Mittellamellen-Lignin in einer enzymatischen Reaktion zu reagieren. Der aus den mechanisch zerkleinerten Holzteilchen bzw. -fasern bestehende Rohstoff wird danach durch Einwirkung von thermischen, mechanischen oder thermo-mechanischen Verfahren zu Formkörpern geformt.

Als Ausgangsmaterialien für das erfindungsgemäße Verfahren dienen Späne und/oder Fasern aus Holz bzw. holzartigen Rohstoffen. Als holzartige Rohstoffe im Sinne dieser Definition werden auch holzähnliche Stoffe angesehen, die einen Ligningehalt, insbesondere an Mittellamellen-Lignin aufweisen, der einer Einwirkung von phenoloxidierenden Enzymen zugänglich ist, beispielsweise Holzspäne, Holzfasern, Lachs, Flachsschäben, Jute, Kokosfasern und dergleichen.

Die Ausgangsmaterialien werden auf bekannte Weise zerkleinert bzw. zerfasert, beispielsweise durch mechanische Verfahren, wie Refiner oder durch Dampfzerkleinerungsverfahren, wie das Dampfexplosionsverfahren nach Mason. Refiner-Anlagen sind kommerziell erhältlich, zum Beispiel werden solche Anlagen von der Firma Defibrator, Schweden, geliefert oder von der Firma Andritz Sprout Bauer, USA. Beim Dampfexplosionsverfahren wird das Ausgangsmaterial mit Dampf unter Druck erhitzt und plötzlich entspannt.

In einer bevorzugten Ausführungsform des erfindungsgemäßen Verfahrens werden die Enzyme, die mit dem Lignin enzymatisch reagieren können, in gelöster Form mit dem zerkleinerten Ausgangsmaterial in Berührung gebracht. Dies kann beispielsweise durch Sprühen, Tauchen oder Tränken des Ausgangsmaterials mit der enzymhaltigen Lösung erfolgen.

Vorzugsweise werden als Enzyme Oxidasen verwendet, insbesondere Polyphenoloxidasen (Laccasen), Tyrosinasen, Peroxidasen und dergleichen. In vorteilhafter Weise werden solche Enzyme eingesetzt, wie sie in der DE 30 37 992 C2, der DE 36 44 397 C1 oder DE 40 33 246 beschrieben werden. Es handelt sich dabei um phenoloxidierende Enzyme beispielsweise aus Kulturen von Weißfäulepilzen, die mit den aromatischen Resten des Lignins, möglicherweise auch der Hemicellulose, in einer Art radikalischen Phenoloxidationsreaktion reaktive Gruppen im Lignin- oder Hemicellulosemolekül erzeugen können, die dann durch sekundäre Reaktionen polymerisieren und/oder vernetzen.

Die enzymhaltige Lösung kann auch Hilfsstoffe, wie Induktoren, Emulgatoren, Effektoren und/oder andere Enzyme, die unterstützende Funktionen erfüllen, enthalten. Die Inkubationszeit der Enzyme mit dem aufgeschlossenen lignocellulosehaltigen Rohstoff sollte Vorzugsweise mindestens 2 Stunden betragen. Gegebenenfalls kann die Inkubationszeit durch Variation bestimmter Parameter, wie pH-Wert, Temperatur, Ionenstärke etc., optimiert werden. Die enzymatische Reaktion kann beispielsweise durch Zugabe von Enzyminhibitoren, durch thermische oder chemische Denaturierung der Enzyme oder auch durch Entzug der Enzymlösung durch Filtration etc., beendet werden.

Eine obere Grenze der Inkubationszeit ist unkritisch. So können die lignocellulosehaltigen Rohstoffe durchaus zum Beispiel bis 170 Stunden mit den Enzymlösungen inkubiert werden. Mithin ist es auch möglich, die aufgeschlossenen lignocellulosehaltigen Rohstoffe während eines Transports längere Zeit mit den Enzymen zu inkubieren.
Die oben angegebene Mindestinkubationszeit von 2 Stunden gilt für die derzeit leicht zugänglichen Systeme bzw. Enzymkonzentrationen. Mit konzentrierteren oder höher wirksameren Enzymsystemen lassen sich diese Inkubationszeiten auch unterschreiten.

Allgemein läßt sich feststellen, daß die zur Inkubation verwendeten Enzyme bestimmte Mindestaktivitäten aufweisen sollten. vorzugsweise betragen diese Aktivitäten zwischen 50 U/ml bis einigen 10.000 U/ml, vorzugsweise 500 bis 2.000 U/ml Die Aktivitätsbestimmung erfolgt photometrisch bei 468 nm mittels einer Referenzsubstanz entsprechend Dissertation Kharazipour, 1983, Universität Göttingen. Bei hohen Enzymaktivitäten empfiehlt es sich, entsprechend verdünnte Lösungen einzusetzen.

Nach dem erfindungsgemäßen Verfahren lassen sich z. B. plattenförmige Formkörper nach dem Naß-, Trocken- oder Halbtrockenverfahren herstellen. Beim Trocken-Verfahren beträgt die Restfeuchte des aufgeschlossenen lignocellulosehaltigen Rohstoffes weniger als 20 Gew.-% Feuchtigkeit. Unter halbtrocknen lignocellulosehaltigen Rohstoffen werden solche mit einer Restfeuchte von 20 Gew.-% bis 35 Gew.-% Feuchtigkeit und unter nassen lignocellulosehaltigen Rohstoffen solche mit einer Restfeuchte von bis zu 120 Gew.-% Feuchtigkeit verstanden, bezogen auf den Lignocellulosegehalt atro.

Der Wasserentzug kann beispielsweise durch Absaugen oder Abpressen des Wassers erfolgen. Es ist ebenfalls möglich, die inkubierten aufgeschlossenen lignocellulosehaltigen Rohstoffe durch Trocknen bei 30 bis 200°C, vorzugsweise 50 bis 100°C auf die gewünschte Restfeuchte atro lignocellulosehaltiger Stoffe zu trocknen. Im Falle der Herstellung von MDF-Holzfaserplatten kann das Rohmaterial bis zu einer Restfeuchte von unter 10%, vorzugsweise ca. 3 % getrocknet werden und dann für beispielsweise 1,5 bis 3 Tage inkubiert werden.

Vorzugsweise wird das enzymatisch behandelte Material zu einem vliesartigen Vorprodukt geformt, danach vorverdichtet, dann in die gewünschte Form gebracht und danach unter Druck und gegebenenfalls zusätzlicher Hitzeeinwirkung verpreßt. Die daraus entstehenden Formkörper sind bindemittelfrei und zeigen hervorragende Quellungs-Resistenz wie auch mechanische Eigenschaften, wie beispielsweise sehr gute Querzugeigenschaften und Biegefestigkeit.

Es hat sich herausgestellt, daß bei der Behandlung der Ausgangsmaterialien mit der Enzymlösung sich in dieser bestimmte phenolische Stoffe, die aus Ligninmolekülen stammen bzw. Kohlehydrate anreichern, deren Menge bestimmbar ist. Daraus lassen sich Rückschlüsse auf die Durchführung der Enzyminkubation führen, die im Rahmen einer automatischen Prozeßsteuerung hinsichtlich der Inkubationsbedingungen ausgenutzt werden kann.

Die bindemittelfreien Formkörper, insbesondere plattenförmige Werkstoffe, die nach dem erfindungsgemäßen Verfahren erhältlich sind, können in beliebigen Formen vorgeformt werden, um dann mit geeigneten Preßwerkzeugen in an sich bekannter Weise, beispielsweise zu Faserplatten oder Spanplatten oder anderen Holzfaserplatten, wie mitteldichte Faserplatten, Dämmfaser- und Holzfaserplatten, Spanplatten, Formteile für die Verpackungs-, Auto- oder Bauindustrie oder dergleichen verarbeitet zu werden.

Es hat sich herausgestellt, daß die mit Enzymen behandelte Rohstoffmasse längere Zeit stabil und somit lagerfähig ist. Damit ergibt sich die Möglichkeit, diese Masse durch Zerkleinerung des Rohstoffes und Inkubation mit den entsprechenden Enzymen vorzufertigen, in Tanks zu lagern, um dann später Formungsprozessen zugeführt zu werden. Diese Masse stellt somit ein Zwischenprodukt auf dem Weg der Herstellung der Formkörper dar.

Die so hergestellten bindemittelfreien Formkörper vereinen in geradezu idealer Weise ökonomische Anforderungen wie auch Anforderungen an umweltschonende Herstellung von beispielsweise Holzwerkstoffen. Aufgrund des Verzichts auf Bindemittel sind die erfindungsgemäß hergestellten Formkörper, insbesondere Holzwerkstoffe in Form von Spanplatten, Dämmfaser- oder Holzfaserplatten oder mitteldichten Faserplatten, absolut umweltverträglich, da sie lediglich den Rohstoff Holz in modifizierter Form und durch die enzymatische Behandlung in einer Art reorganisierter Form enthalten. Durch den Verzicht auch auf emissionsarme Bindemittel, wie sie in den oben genannten Patentdokumenten beschrieben sind, lassen sich die Produktionskosten reduzieren.

Die Erfindung wird im folgenden anhand der Beispiele näher erläutert.

### Beispiel 1

### Herstellung eines bindemittelfreien Formkörpers aus Holz.

500 g einer in einem Refiner hergestellten (defibrierten) Holzfaser mit einer Faserfeuchte von ca. 50 % wurden in eine Phenoloxidase-EnzymLösung getaucht, die aus Laccase (E.C.1.10.3.2.) von 860 U/ml bestand. Die Temperatur betrug 25°C. Nach einer Inkubationszeit von 7 Tagen wurde das noch etwa 100 % Restfeuchte (atro Holzfaser) enthaltende und inkubierte Fasermaterial im Naßverfahren auf ein Sieb gestreut und zu einem Faservlies geformt und verdichtet sowie unter. Druck bei 180°C zu einer Holzfaserplatte verpreßt. Die Preßzeit betrug 8 Minuten. Die Dicke der entsprechenden Platten belief sich auf 4,5 mm.

Nach dem Verpressen wurden die Faserplatten abgekühlt.

### Beispiel 2 (Vergleich)

Zum Vergleich zum Beispiel 1 wurden jeweils 500 g defibrierter Holzfaser mit einer Holzfaserfeuchte von ca. 50% in normales Wasser getaucht. Die Temperatur betrug 25°C. Nach einer Inkubationszeit von 7 Tagen wurde mit noch etwa 100% Restfeuchte (atro Holzfaser) im Wasser getauchtes Faser-Material wie im Beispiel 1 beschrieben bei 180°C verpreßt. Die Dicke der Platte betrug 4,8 mm.
QZ Querzugfestigkeit
LZ Längszufestigkeit
BF Biegefestigkeit
Quellung, wie definiert in den DIN-Normen 68761 und 68763

**Tabelle 1**

| Meßgröße | Beispiel 1 | Beispiel 2 (Vergleich) |
|---|---|---|
| Dicke mm | 4,3 | 4,8 |
| QZ (N/mm²) | 0,43 | 0,03 |
| LZ (N/mm²) | 16,76 | 7,21 |
| BF (N/mm²) | 36,2 | 14,9 |
| Quellung % | 34,0 | 151 |
| Dichte kg/m³ | 986,0 | 919 |

### Beispiel 3

### Herstellung einer MDF-Platte im Trockenverfahren

Es wurden defibrierte Holzfasern auf eine Holzfeuchte von 3,0% atro bei 130°C getrocknet. Danach wurden die.so erhaltenen getrockneten Holzfasern mit einer Enzymlösung gemäß Beispiel 1 (Anfangsaktivität des Enzyms ca. 1.000 U/ml) für eine Dauer von 48 Stunden inkubiert. Danach wurden die inkubierten und getrockneten Holzfasern zu einem Faservlies geformt und verdichtet und zu einer MDF-Platte verpreßt. Die Preßzeit betrug 5 Minuten, der Preßdruck ca. 4.9 MPa (50 KP/cm²) und die Temperatur bei der Verpressung ca. 180°C.

Die Tabelle 2 zeigt die Eigenschaften der so erhaltenen MDF-Faserplatte.

**Tabelle 2**

| Meßgröße | | |
|---|---|---|
| Dicke mm | | 5,39 |
| QZ N/mm² | | 0,46 |
| Quellung % | 2 hr | 19,16 |
| | 24 hr | 21,84 |
| Rohdichte kg/m² | | 885 |

### Beispiel 4 (Vergleich)

Zum Vergleich zum Beispiel 3 wurden defibrierte Holzfasern auf eine Restfeuchte von 3,0 % atro bei 130°C getrocknet. Danach wurden die so erhaltenen, getrockneten Holzfasern in Leitungswasser für eine Dauer von 48 Stunden getaucht. Danach wurden die Holzfasern entwässert und bis auf eine Restfeuchte getrocknet. Danach wurden die getrockneten Holzfasern zu einem Faservlies wie in Beispiel 3 beschrieben zu einer MDF-Platte verpreßt. Die Preßzeit betrug 5 Minuten, der Preßdruck ca. 4.9 MPa (50 KP/cm²) und die Temperatur bei der Verpressung ca. 180°C. Es entstand keine brauchbare Platte.

Die Aktivität der Enzymlösungen wurde jeweils wie folgt bestimmt:

Zu 1 ml 0,2 mM 2,6-Dimethoxyphenol in Mcilvaine Puffer (0,1 m Zitronensäure + 0,2 Dikaliumhydrogenphosphat Puffer gibt man 50 bis 100 ml Enzymlösung.

Nach einer Inkubationszeit von 10 bis 15 Minuten bei 37°C wird die Reaktion mit 1,0 ml DMSO (Dimethylsulfoxid) gestoppt. Die Auswertung erfolgt photometrisch bei einer Wellenlänge von 468 nm und wird mit einem Standard verglichen.

### Beispiel 5

### Herstellung einer MDF-Faserplatte im Trockenverfahren

Es wurden jeweils 500 g defibrierte Faser mit einer Faserfeuchte von ca. 50 % in eine Peroxidase-Enzymlösung getaucht. Als Peroxidase-Enzymlösung wurde eine Lösung von Peroxidase (E.C.1.11.1.7.) mit einer Aktivität von 166 U/ml eingesetzt. Die Temperatur betrug 25°C, die Inkubationszeit 6 Stunden.Dabei wurden alle 3 min 30 ml einer 15 mMol-haltigen H₂O₂-Lösung zugegeben.

Es wurden Inkubationsversuche bei pH-Werten von 4, 5 und 6 durchgeführt.

Nach der Inkubation wurde das Material in einer Schleuder auf etwa 100 % Restfeuchte gebracht und anschließend in einem Trockner auf eine Restfeuchte von 25 % (atro Holzfaser) gebracht. Das getrocknete Material wurde auf ein Sieb gestreut, zu einem Faservlies geformt, vorverdichtet und bei 50 kp/cm² Druck zu einer Platte verpreßt. Die Preßzeit betrug 6 min. Die erhaltene Platte hatte jeweils eine Dicke von 5 mm.

Nach dem Verpressen wurden die Platten abgekühlt.

Die Platten, die aus dem bei verschiedenen pH-Werten inkubierten Material hergestellt waren, hatten folgende Eigenschaften:

| pH-Wert der Inkubation | Rohdichte kg/m³ | Quellung % 24h | Querzugfestigkeit N/mm² |
|---|---|---|---|
| 4 | 900 | 27 | 0,75 |
| 5 | 900 | 18 | 0,72 |
| 6 | 1000 | 13 | 0,91 |

Die Werte verbessern sich bei steigenden pH-Werten. Eine weitere Steigerung des pH-Werts auf 7 erbringt keine weiteren Verbesserungen.

## Patentansprüche

1. Verfahren zum Verkleben von auf mechanischem Wege hergestellten Holzfragmenten,
**dadurch gekennzeichnet,daß**
das Mittellamellen-Lignin des Holzes durch Inkubation mit Enzymlösungen von phenoloxidierenden Enzymen aktiviert und verklebt wird.

2. Verfahren nach Anspruch 1, dadurch gekennzeichnet, daß mechanisch hergestellte Holzfasern ohne chemischen Aufschluß mit den phenoloxidierenden Enzymen inkubiert werden,
dem Inkubationsgemisch nach Bedarf Wasser bis auf eine Restfeuchte von etwa 5 bis 60 Gew.-% entzogen wird, und das Gemisch durch Einwirkung von Druck und/oder Wärme verklebt und zu Formkörpern verformt wird.

3. Verfahren nach Anspruch 2, dadurch gekennzeichnet, daß dem Inkubationsgemisch Wasser bis auf eine Restfeuchte von 8bis 20 Gew.-% entzogen wird.

4. Verfahren nach mindestens einem der Ansprüche 1 bis 3,
dadurch gekennzeichnet, daß
die Holzfragmente durch Behandlung in einem Refiner oder durch Dampfexplosionsverfahren hergestellt werden.

5. Verfahren nach Anspruch 1 ünd/oder 2, dadurch gekennzeichnet, daß bei Verwendung von Spänen diese durch mechanische Zerkleinerung hergestellt worden sind.

6. Verfahren nach mindestens einem der Ansrüche 1 bis 5, dadurch gekennzeichnet, daß die Enzyme in gelöster Form durch Sprühen, Tauchen und/oder Trinken mit dem Holzfragment in Kontakt gebracht wird.

7. Verfahren nach mindestens einem der Ansprüche 1 bis 6, dadurch gekennzeichnet, daß als Enzyme Oxidasen verwendet werden

8. Verfahren nach Anspruch 7, dadurch gekennzeichnet, daß Polyphenoloxidasen (Laccasen), Thyrosinase oder Peroxidasen verwendet werden.

9. Verfahren nach mindestens einem der Ansprüche 1 bis 8, dadurch gekennzeichnet, daß die Lösung der Enzyme Hilfsstoffe wie Induktoren, Emulgatoren, Effektoren und/oder andere Enzyme mit unterstützender Funktion enthält.

10. Verfahren nach mindestens einem der Ansprüche 1 bis 9, dadurch gekennzeichnet, daß die Inkubationszeit des Enzyms oder der Enzyme mindestens zwei Stunden beträgt.

11. Verfahren nach mindestens einem der Ansprüche 1 bis 10, dadurch gekennzeichnet, daß die Inkubation durch Zugabe von Enzyminhibitoren, durch Denaturierung der Enzyme oder durch Entzug der Enzymlösung beendet wird.

12. Verfahren nach mindestens einem der Ansprüche 1 bis 11, dadurch gekennzeichnet, daß der teilweise Wasserentzog nach Inkubation in einem Trockenverfahren bis zu einer Restleuchte das Holzes von weniger als 20 Gew. % Feuchtigkeit geführt wird.

13. Verfahren nach mindestens einem der Ansprüche 1 bis 12, dadurch gekennzeichnet, daß der teilweise Wasserentzug nach Inkubation in einem Halbtrockenverfahren bis zu einer Reskfeuchte Von 20 Gew. % bis 35 Gew. % Feuchtigkeit geführt wird.

14. Verfahren nach mindestens einem der Ansprüche 1 bis 13, dadurch gekennzeichnet, daß der teilweise Wasserentzug nach Inkubation in einem Naßverfahren bis Zu einer Restfeuchte bis 120 Gew. % Feuchtigkeit geführt wird.

15. Verfahren nach mindestens einem der Ansprüche 1 bis 14, dadurch gekennzeichnet, daß die Herstellung von Formkörpern neben Einwirkung von mechanischen Verfahren auch durch Einwirkung von thermischen Verfahren geformt wird.

16. Verfahren nach mindestens einem der Ansprüche 1 bis 15, dadurch gekennzeichnet, daß der vorbereitete holzartige Stoff zu einem vliesartigen Vorprodukt geformt, vorverdichtet, in die gewünschte Form gebracht und danach unter Druck und gegebenenfalls Hitzeeinwirkung verpreßt wird ohne Anwesenheit von konventionellen Bindemitteln.

17. Verfahren gemäß einem der Ansprüche 1 bis 16, dadurch gekennzeichnet, daß die Verpressong mehrstufig erfolgt unter weiterer Verdichtung und gegebenenfalls Formgebung zu Faserformteilen.

## Claims

1. Process for conglutinating mechanically produced wood fragments,
**characterized in that**
the middle-lamella lignin of the wood is activated and conglutinated by incubating it with enzyme solutions of phenol-oxidising enzymes.

2. Process according to Claim 1, **characterized in** that mechanically produced wood fibres are incubated with said phenol-oxidising enzymes without chemical disintegration,
that water is removed from said incubation mixture, as far as applicable, so as to achieve a residual humidity level of approximately 5 to 60 % by weight, and that the mixture is conglutinated under the influence of pressure and/or heat and is formed into moulded bodies.

3. Process according to Claim 2, **characterized in** that water is removed from said incubation mixture so as to achieve a residual humidity level of 8 to 20 % by weight.

4. Process according to at least one of Claims 1 to 3, **characterized in** that said wood fragments are produced in a refiner or in a steam explosion process.

5. Process according to Claim 1 and/or 2, **characterized in** that when chips are used these chips have been produced by mechanical comminution.

6. Process according to at least one of Claims 1 to 5, **characterized in** that said enzymes are brought into contact with said wood fragment material in a dissolved form by spraying, immersion and/or soaking.

7. Process according to at least one of Claims 1 to 6, **characterized in** that oxidases are used as enzymes.

8. Process according to Claim 7, **characterized in** that polyphenol oxidases (laccases), thyrosinase or peroxidases are employed.

9. Process according to at least one of Claims 1 to 8, **characterized in** that the solution of said enzymes contains auxiliary substances such as inducers, emulsifiers, effectors and/or other enzymes displaying a promoting function.

10. Process according to any of Claims 1 to 9, **characterized in** that the incubation period of said enzyme or enzymes is at least two hours.

11. Process according to at least one of Claims 1 to 10, **characterized in** that the incubation is completed by the addition of enzyme inhibitors, by denaturing said enzymes, or by removal of said enzyme solution.

12. Process according to at least one of Claims 1 to 11, **characterized in** that the partial removal of water after incubation is performed in a dry process up to achievement of a residual humidity in the wood of less than 20 % by weight.

13. Process according to at least one of Claims 1 to 12, **characterized in** that the partial removal of water after incubation is performed in a semi-dry process up to achievement of a residual humidity of 20 % by weight to 35 % by weight.

14. Process according to at least one of Claims 1 to 13, **characterized in** that the partial removal of water after incubation is performed in a wet process up to achievement of a residual humidity of up to 120 % by weight.

15. Process according to at least one of Claims 1 to 14, **characterized in** that the production of moulded bodies is performed also under the influence of thermal processes besides mechanical processes.

16. Process according to at least one of Claims 1 to 15, **characterized in** that the prepared igneous material is shaped into a pre-product of the type of a fibrous web, is then pre-compressed, formed into the desired shape, and thereafter compressed by application of pressure and, if necessary, heat, without the presence of conventional binding agents.

17. Process according to any of Claims 1 to 16, **characterized in** that the pressing process is performed in several stages with a continuing compression and, if applicable, shaping into fibrous moulded bodies.

## Revendications

1. Procédé à coller ensemble des particules de bois produites de façon mécanique,
**caractérisé en ce que**
la lignine de la couche lamellaire centrale du bois est activée et collée ensemble par incubation avec des solutions enzymatiques d'enzymes d'oxydation de phénol.

2. Procédé selon la revendication 1, **caractérisé en ce** que des fibres ligneuses produites de façon mécanique subissent une incubation avec desdits enzymes d'oxydation de phénol, sans dissolution chimique,
que de l'eau est extraite dudit mélange d'incubation, suivant les besoins, afin d'atteindre un niveau d'humidité résiduelle entre 5 et 60 % en poids environ, et que le mélange est collé ensemble sous l'influence de pression et/ou chaleur et est formé en objets moulés.

3. Procédé selon la revendication 2, **caractérisé en ce** que de l'eau est extraite dudit mélange d'incubation afin d'atteindre un niveau d'humidité résiduelle de 8 à 20 % en poids.

4. Procédé selon au moins une quelconque des revendications 1 à 3, **caractérisé en ce** que lesdits copeaux de bois sont produits dans un raffineur ou par un processus à explosion de vapeur.

5. Procédé selon la revendication 1 et/ou 2, **caractérisé en ce** qu'au cas où des copeaux sont utilisés, ces copeaux sont produits par fragmentation mécanique.

6. Procédé selon au moins une quelconque des revendications 1 à 5, **caractérisé en ce** que lesdits enzymes, sous forme dissout sont portés en contact avec ledit matériau en particules ligneuses par pulvérisation, immersion et/ou imprégnation.

7. Procédé selon au moins une quelconque des revendications 1 à 6, **caractérisé en ce** que des oxydases sont utilisées comme enzymes.

8. Procédé selon la revendication 7, **caractérisé en ce** que des oxydases de polyphénol (laccases), la thyrosinase ou des peroxydases sont utilisées.

9. Procédé selon au moins une quelconque des revendications 1 à 8, **caractérisé en ce** que la solution desdits enzymes contient des substances auxiliaires comme des inducteurs, agents émulsionnants, effecteurs et/ou des autres enzymes à fonction d'adjuvant.

10. Procédé selon une quelconque des revendications 1 à 9, **caractérisé en ce** que la période d'incubation dudit enzyme ou desdits enzymes est au moins deux heures.

11. Procédé selon au moins une quelconque des revendications 1 à 10, **caractérisé en ce** que l'incubation est terminée par l'addition des agents inhibiteurs d'enzymes, par dénaturation desdits enzymes, ou par extraction de ladite solution d'enzymes.

12. Procédé selon au moins une quelconque des revendications 1 à 11, **caractérisé en ce** que l'extraction partielle de l'eau après l'incubation est réalisée par un processus à sec, jusqu'à ce qu'un niveau d'humidité résiduelle allant à 120 % en poids soit atteint.

13. Procédé selon au moins une quelconque des revendications 1 à 12, **caractérisé en ce** que l'extraction partielle de l'eau après l'incubation est réalisée par un processus mixte, jusqu'à ce qu'un niveau d'humidité résiduelle allant à 120 % en poids soit atteint.

14. Procédé selon au moins une quelconque des revendications 1 à 13, **caractérisé en ce** que l'extraction partielle de l'eau après l'incubation est réalisée par un processus au mouillé, jusqu'à ce qu'un niveau d'humidité résiduelle allant à 120 % en poids soit atteint.

15. Procédé selon au moins une quelconque des revendications 1 à 14, **caractérisé en ce** que la production des objets moulés est réalisée aussi sous l'influence des processus thermiques complémentaires aux processus mécaniques.

16. Procédé selon au moins une quelconque des revendications 1 a 15, **caractérisé en ce** que le matériau ligneux ainsi préparé est façonné en un demi-produit du genre d'un matelas de fibres, est ensuite pré-comprimé et moulé en forme souhaité, et subit ci-après une compression sous pression et, selon les besoins, sous charge thermique, à l'absence des liants conventionnels.

17. Procédé selon une quelconque des revendications 1 à 16, **caractérisé en ce** que le processus de compression déroule en plusieurs étapes à compression ultérieure et, suivant les besoins, à façonnage en objets moulés.
